# EUROPEAN PATENT APPLICATION

(11) **EP 4 794 332 A1**
(43) Date of publication of application: **19.08.2026**
(21) Application number: 25305194.0
(22) Date of filing: 12.02.2025
(51) Int. Cl.: H04N 19/17, G06N 3/045, G06T 9/00, H04N 19/70

(54) **SIGNALING FOR FEATURE-BASED IMPLICIT NEURAL REPRESENTATION GRID SIZE ENCODING**

(71) Applicant: InterDigital CE Patent Holdings, SAS, 75017 Paris (FR)
(72) Inventor: SCHNITZLER, Francois, 56890 SAINT AVE (FR); LAMBERT, Anne, 35250 SAINT-AUBIN-D'AUBIGNE (FR); GALPIN, Franck, 35235 THORIGNE-FOUILLARD (FR); LE MEUR, Olivier, 35160 TALENSAC (FR); CHEN, Ya, 35700 RENNES (FR); DAMODARAN, Bharath Bhushan, 56000 VANNES (FR)
(74) Representative: Interdigital

(57) **Abstract**

Method and apparatus are provided wherein one or more syntax elements are decoded providing for reconstructing at least one part of an image or a 3D object using at least one hybrid Implicit Neural Representation network, the at least one hybrid Implicit Neural Representation network comprising at least one mapping transformation that maps input coordinates of the image or 3D object to at least two successive grids of features, and an INR network that takes as input, features of the at least one grid of features and outputs values of the image or 3D object at the input coordinates, wherein dimensions of a current grid of the at least two successive grids of features are derived from a first grid of the at least two successive grids of features based on the one or more syntax elements. An extension of at least one dimension of a first grid of the at least two successive grids of features is determined providing an extended dimension of the first grid of the at least two successive grids of features such that dimensions of grids of the at least two successive grids of features are deteremined using the extended dimension of the first grid and input coordinates are mapped to grid positions of the grids of the at least two successive grids of features to reconstruct the at least one part of the image or 3D object.

## Description

### BACKGROUND

The present embodiments generally relate to image, video and/or 3D scene compression using Feature-based Implicit Neural Representation (INR). The present embodiments relate to a method and an apparatus for encoding, decoding, transmitting metadata used by a decoder for reconstructing a signal encoded using a Feature-based INR network.

To achieve high compression efficiency, image and video coding schemes usually employ prediction and transform to leverage spatial and temporal redundancy in the video content. Emerging technology makes use of neural networks. Among them, Implicit Neural Representation (INR) aims at parameterizing a function which takes coordinates as inputs and outputs values of a signal at these coordinates. INR can be used for instance for compressing image, videos or 3D objects or scene. It can also apply to any type of signal. Approaches are known to construct an INR network for encoding 2D or 3D images. Approaches are also known to compress a neural network. However, any image/video decoder could not reconstruct the image or video for display based only on the INR. Additional information is needed to address any image/video decoder for reconstructing an output signal.

### BRIEF SUMMARY

One general aspect includes a method decoding one or more syntax elements providing for reconstructing at least one part of an image or a 3D object using at least one hybrid implicit neural representation (INR) network. The at least one hybrid implicit neural representation network may include: at least one mapping transformation that maps input coordinates of the image or 3D object to at least two successive grids of features, and an INR network that takes as input, features of the at least one grid of features and outputs values of the image or 3D object at the input coordinates, wherein dimensions of a current grid of the at least two successive grids of features are derived from a first grid of the at least two successive grids of features based on the one or more syntax elements. The method also includes determining an extension of at least one dimension of the first grid of the at least two successive grids of features providing an extended dimension of the first grid, determining dimensions of the grids of the at least two successive grids of features using the extended dimension of the first grid, mapping input coordinates to grid positions of the grids of the at least two successive grids of features to reconstruct the at least one part of the image or 3D object. Other embodiments of this aspect include corresponding computer systems, apparatus, and computer programs recorded on one or more computer storage devices, each configured to perform the actions of the methods.

In a variant, determining the extension is responsive to a determination that a value of at least one dimension of at least one grid of the at least two successive grids of features derived from a dimension of the first grid of features is not an integer. In another embodiment, determining the extension is based on a value of a decoded flag indicating whether extension of dimensions of the first grid is to be determined.

One general aspect includes a method encoding at least one part of an image or a 3D object using at least one hybrid implicit neural representation (INR) network. The at least one hybrid implicit neural representation (INR) network includes at least one mapping transformation that maps input coordinates of the image or 3D object to at least two successive grids of features, and an INR network that takes as input, features of the at least one grid of features and outputs values of the image or 3D object at the input coordinates. The method also includes obtaining one or more syntax elements that provides for deriving dimensions of a current grid of the at least two successive grids of features from a first grid of the at least two successive grids of features. The method also includes responsive to a determination that a value of at least one dimension of at least one grid of the at least two successive grids of features derived from a dimension of the first grid of features of the at least two successive grids of features is not an integer, determining an extension of at least one dimension of the first grid of the at least two successive grids of features providing an extended dimension of the first grid of the at least two successive grids of features. The method also includes determining dimensions of grids of the at least two successive grids of features using the extended dimension of the first grid providing determined dimensions grid. The method also includes obtaining features values of the at least two successive grids of features using the determined dimensions grid. The method also includes obtaining parameters of the INR network using the feature values. The method also includes encoding in a bitstream the one or more syntax elements, the feature values and the parameters of the INR network.

Other embodiments of this aspect include corresponding computer systems, apparatus, and computer programs recorded on one or more computer storage devices, each configured to perform the actions of the methods.

One or more embodiments also provide a bitstream and a computer readable storage medium having stored thereon the bitstream generated according to the methods described herein. One or more embodiments also provide a method and apparatus for transmitting or receiving the bitstream generated according to the methods described above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a diagram illustrating an example INR network 200, according to one or more embodiments of the present disclosure;
FIG. 3 is a block diagram of an example video encoder 300, according to one or more embodiments of the present disclosure;
FIG. 4 is a block diagram of an example video decoder 400, according to one or more embodiments of the present disclosure;
FIG. 5 is a diagram illustrating a hybrid INR network 500, according to one or more embodiments of the present disclosure;
FIG. 6 is a block diagram illustrating an example video encoder 600, according to one or more embodiments of the present disclosure;
FIG. 7 is a block diagram illustrating an example video decoder, according to one or more embodiments of the present disclosure;
FIG. 8 illustrates an example of extension of a grid of features according to an embodiment;
FIG. 9 illustrates an example of a method for encoding image, video or 3D object using a hybrid INR network, according to one or more embodiments of the present disclosure;
FIG. 10 illustrates an example of a method for decoding image, video or 3D object using a hybrid INR network, according to one or more embodiments of the present disclosure;
FIG. 11 shows two remote devices communicating over a communication network in accordance with an example of the present principles; and
FIG. 12 shows the syntax of a signal in accordance with an example of the present principles.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

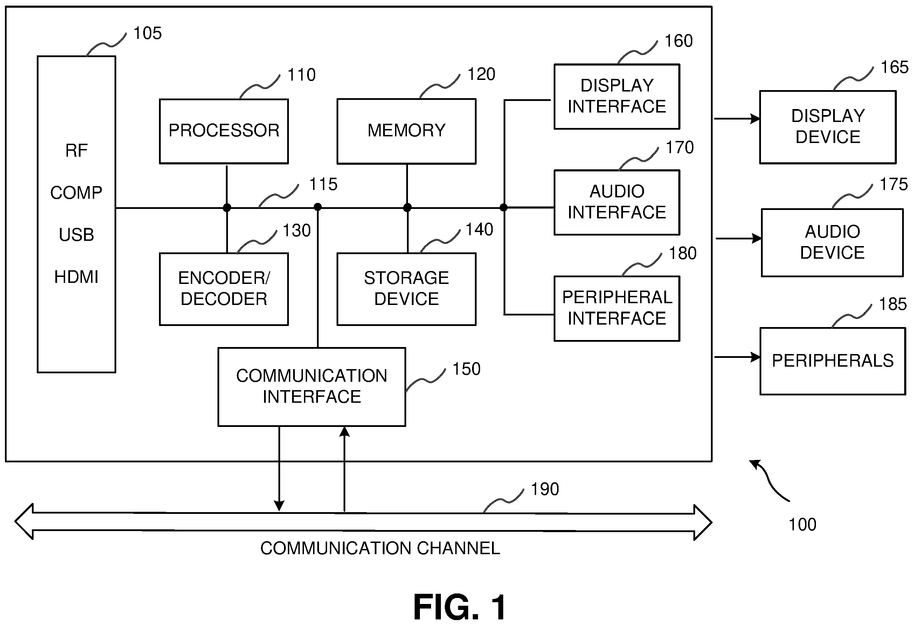

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

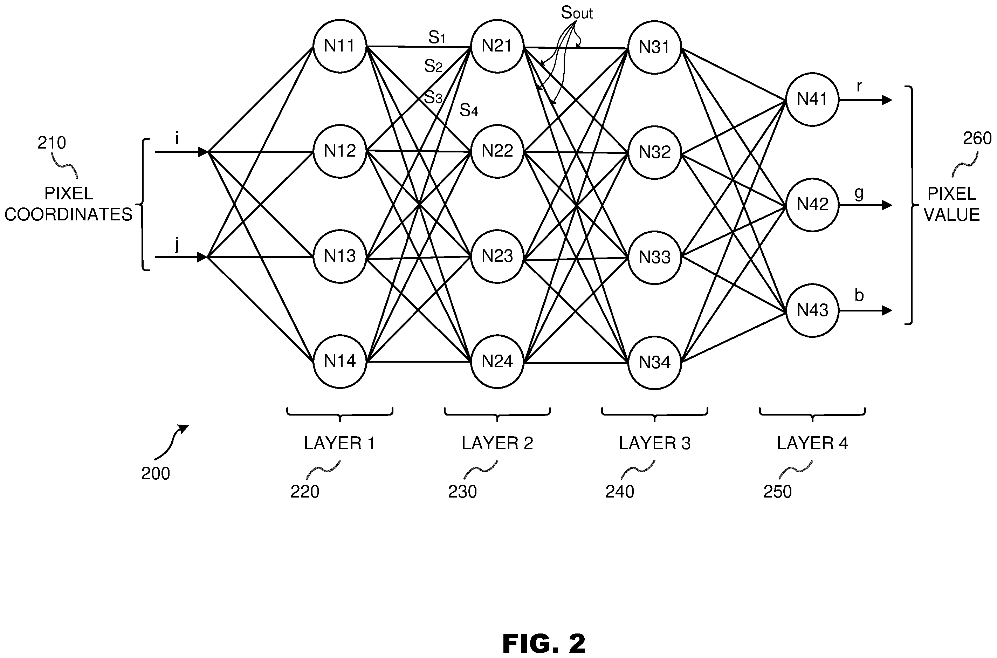

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs. FIG. 2 is a diagram illustrating an example INR network 200. An INR network is a neural network composed of multiple layers; each layer includes multiple nodes (denoted by circles). Generally, the architecture of a neural network is characterized by the number of layers, the number of layers' nodes, and by the way the layers' nodes are connected. In the example of FIG. 2, the network 200 has four layers 220, 230, 240, 250 that are fully connected. For example, the first layer 220 includes four nodes N11, N12, N13, and N14 that each receives the coordinate values (*i, j*) 210 of a pixel x and each outputs an output signal that, in turn, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a color component value 260 of the pixel *x,* respectively, *r*, *g*, and *b* (or color component values of any other color model, such as *y*, *u*, and *v*)*.*

Each node in the network 200 represents an operator that generates an output signal based on the node's inputs. For example, node N21 of the second layer 230 receives as an input the output signals of nodes N11, N12, N13, and N14, respectively, *s*₁, *s*₂, *s*₃, and *s*₄. These inputs are translated into an output signal *sₒᵤᵣ* that feeds the nodes of the third layer 240. A node's operator can be expressed as follows: ${s}_{out} = A \left({p}_{0}+{\sum }_{i = 1}^{L} {p}_{i} ⋅ {s}_{i}\right) ,$ where, *L* denotes the number of input signals (i.e., the number of nodes from the previous layer that connect to the node), *s =* {*sᵢ* : *i* = 1 *to L*} denotes the node's input signal vector, *sₒᵤᵣ* denotes the node's output signal, *p* = {*pᵢ* : *i* = 0 *to L*} denotes the node's parameter vector (or weight vector), and A denotes an activation function (e.g., ReLU, Sigmoid, or Tanh). The weight vectors (and parameters of the activation functions, if such parameters exist) of respective nodes are collectively referred to as the parameters *θ* of the network 200. These parameters *θ* are determined through a training process. The network operation, denoted by *f_{θ}*, is therefore defined by the network parameters *θ*.

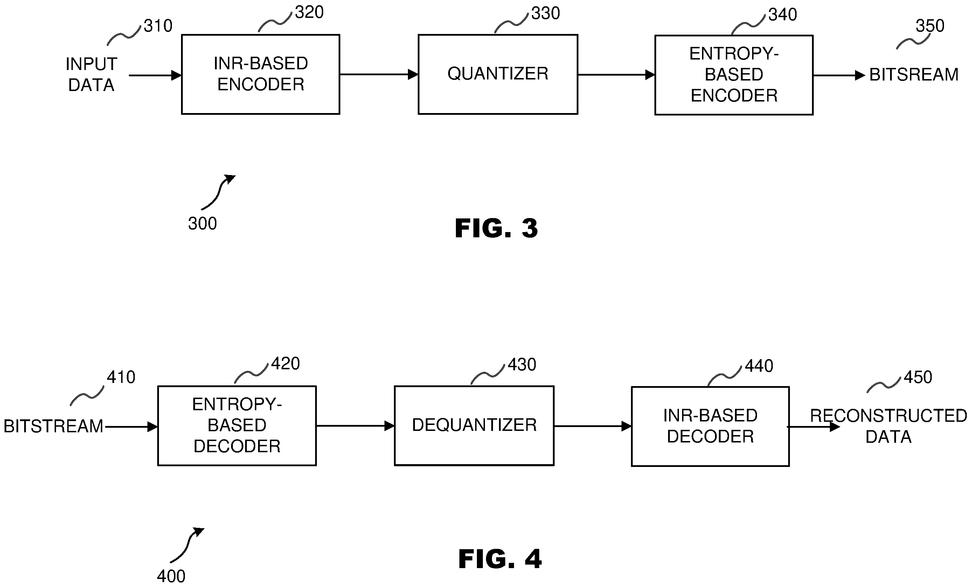

Hence, an INR network 200 is trained to predict a pixel value of an image, ***x***(*i, j*), based on the pixel's coordinates (*i, j*) - that is, *f_{θ}*(*i, j*) = (*r, g, b*) (or *f_{θ}*(*i, j*) = (*y, u, v*)). During a training phase of an INR network 200, the parameters *θ* (or a subset of them) are determined. This is done via an optimization process through which the parameters *θ* that minimize a cost function can be determined. For example, the following cost function can be used: $Cost = D \left(x, {f}_{θ}\right) + λR \left(θ\right)$ where, *D* is a distortion measure, measuring the fidelity of the estimated pixel values, provided by *f_{θ}*, relative to the ground truth, that is, the corresponding pixel values from the original image, denoted by ***x***. And, where *R* is the resulting bitrate of the encoded parameters *θ* (e.g., encoded by quantization and entropy coding as discussed with respect to FIG. 3). A trade-off parameter *λ* can be set to determine the balance between *D* and *R*. Note that the distortion measure *D* can be any metric that measure the distance (or similarity) between the original image ***x*** and its estimated version provided by *f_{θ}*, such as a mean squared error metric or a learned perceptual image patch similarity (LPIPS) metric. For example, a mean squared error metric can be expressed as: ${D}_{MSE} = \frac{1}{WH} {\sum }_{i ∈ W , j ∈ H} {\left(x\left(i, j\right)-{f}_{θ}\left(i, j\right)\right)}^{2} ,$ where, *W* and *H* are the width and height of the image *x* that the INR network is trained to predict. The optimization of the network parameters *θ*, according to equation (2), is typically performed by a machine learning optimization technique, applying, for example, a batch gradient descent algorithm. Following the training of the INR network 200 and using the optimal parameters *θ* (obtained via the optimization process), the INR network can be applied to predict a pixel value based on its corresponding coordinate values.

Using INR networks for the application of encoding and decoding images is further described with respect to FIGS. 3 and 4.

FIG. 3 is a block diagram of an example video encoder 300. In the example of FIG. 3, the video encoder 300 includes an INR-based encoder 320, a quantizer 330, and an entropy-based encoder 340. The INR-based encoder 320 receives an input data 310 to be coded. The input data 310 can be data associated with a frame of video (an image), a frame of a surface representation of an object, or a frame of volumetric data. To code the input data 310, the INR-based encoder 320 trains an INR network (e.g., the INR network 200 described herein). Specifically, based on the input data 310, the INR-based encoder 320 optimizes a cost function associated with the function *f_{θ}*, representative of the INR network, to determine the optimal network parameters *θ*. For example, for an input image with dimensions *W* and *H*, *W* times *H* pairs of pixel coordinates (*i, j*) and corresponding pixel values ***x***(*i, j*) can be used to train the INR network according to equation (2). The optimal parameters *θ*, generated by the INR-based encoder 320, are then quantized by the quantizer 330, and then the quantized parameters are entropy-coded, by the entropy-based encoder 340, into a bitstream 350. Alternatively, the optimal parameters *θ*, generated by the INR-based encoder 320, can be coded using neural compression codecs such as Neural Network Coding (NNC)/ ISO/IEC 15938-17 or MPEG-7 part 17. The bitstream 350 can be used by a decoder to reconstruct the input image 310, as described in reference to FIG. 4.

FIG. 4 is a block diagram of an example video decoder 400. The decoder 400 generally reverses the operation of the encoder 300 of FIG. 3. In the example of FIG. 4, the video decoder 400 includes an entropy-based decoder 420, a dequantizer 430, and an INR-based decoder 440. As illustrated, the decoder 400 receives the bitstream 410, 350 (generated by the encoder 300) and entropy-decodes therefrom the quantized INR network parameters. The dequantizer 430 is then employed to dequantize these quantized INR network parameters, resulting in a restored version of the INR network parameters to be provided to the INR-based decoder 440.

The INR-based decoder 440 applies the trained INR network, defined by the restored INR network parameters, to generate the reconstructed data 450. For example, to decode an input image, the INR-based decoder 440 uses the INR network to predict the value of (or to evaluate *f_{θ}* using the coordinates of) any pixel of the input image. Thus, the decoder 400 can be applied to: 1) reconstruct the whole encoded image 310; 2) to reconstruct only a region of the encoded image; or 3) to progressively reconstruct the encoded image. For example, at the encoder 300, an INR network may be trained to predict pixel values of an image with dimensions *W* = 256 by *H* = 256 based on the corresponding coordinates. At the decoder 400, pixel values of the image can be predicted by evaluating the trained INR network using: 1) the full coordinate set used for training, including all pairs of *i* ∈ 0,1, ...,255 and *j* ∈ 0,1, ...,255; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

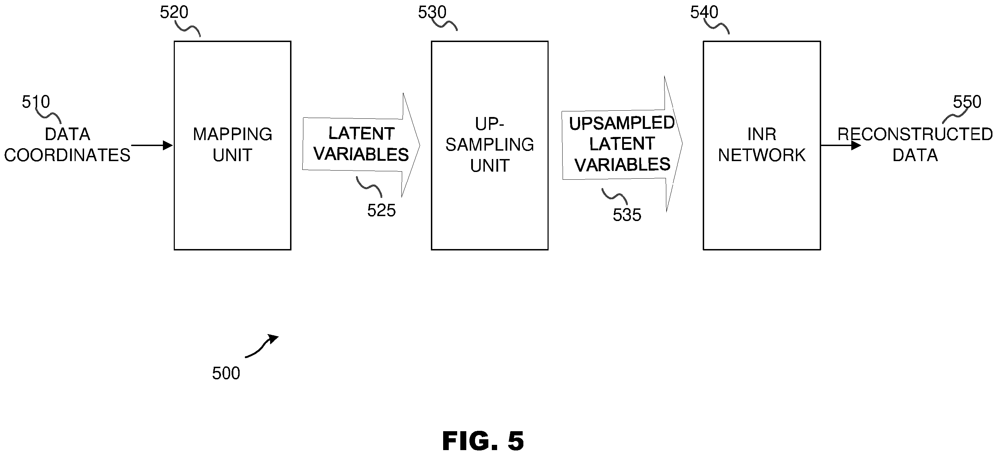

Hybrid INR networks have recently been applied to representing data, including images, videos, 3D objects, and volumetric data, among other applications. In a hybrid INR network, the data coordinates are first mapped into latent variables (or a feature vector). The latent variables are then used as input for the neural network. An example for a hybrid INR network is described in reference to FIG. 5.

FIG. 5 is a diagram illustrating a hybrid INR network 500. In an aspect, this hybrid INR network 500 can be applied by the INR-based encoder 320 of FIG. 3 and the INR-based decoder 440 of FIG. 4. In the example of FIG. 5, during the encoding of input data (that is, the training of the network 500), the input data's coordinates 510 are first mapped, by a mapping unit 520, into respective latent variables 525. The mapping can be implemented by a lookup table or a hash function, for example. The mapping may also involve any transformation, such as a Fourier transformation, a coordinate transformation, a normalization transformation, or a combination thereof. The latent variables 525 can be upsampled, by an up-sampling unit 530, resulting in upsampled latent variables 535. The upsampled latent variables are used as an input to an INR network 540 (e.g., such as INR network 200), trained to produce the reconstructed data 550. In a hybrid-INR network 500 the latent variables 525 are trained together with the parameters *θ* of the INR network 540, resulting in optimal network parameters and optimal latent variables.

Using such an architecture helps in handling the local attributes of the input data. Indeed, a group of latent variables that correspond to a given part of the data may be uncorrelated with other groups of latent variables that correspond to other parts of the data, and, thus, groups of latent variables can be tailored to (or be characteristic of) corresponding parts of the data.

Following the training of the hybrid INR network 500 (e.g., by the encoder 320), the learned latent variables 525 and network parameters are quantized (e.g., by the quantizer 330) and coded (e.g., by the entropy-based encoder 340) into the bitstream. Thus, during inference, first the latent variable 525 and the network parameters of the trained INR network 540 are decoded (e.g., by the entropy-based decoder 420) from the bitstream and dequantized (e.g., by the dequantizer 430). Then, the decoded and dequantized latent variables are up-sampled 530. To reconstruct the data 550, the up-sampled latent variables are fed into the trained INR network 540 using the decoded and dequantized network parameters of the INR network.

A hybrid INR network, named a coordinate-based low complexity hierarchical image codec (COOL-CHIC), was proposed by Ladune et al. (see Ladune et al., "COOL-CHIC: Coordinate-based low complexity hierarchical image codec, " International Conference on Computer Vision (ICCV), 2023, hereinafter "Ladune"). In Ladune as in many hybrid INR models, the latent variables are arranged in hierarchical layers (or channels) ranging from a low-resolution representation (that provides for compact representation of smooth image regions) to a high-resolution representation (that captures the fine details of the image).

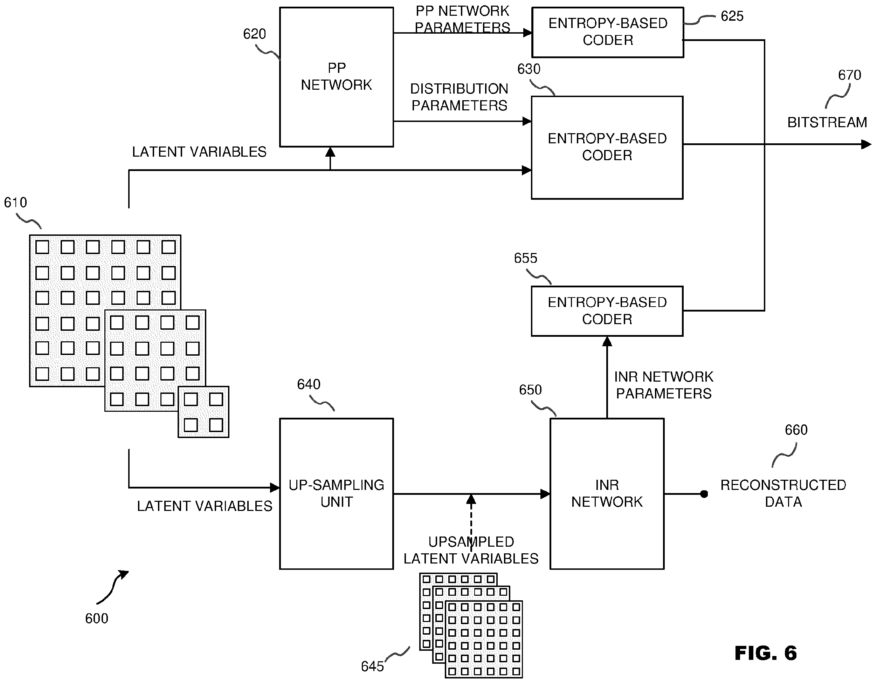

In hybrid INR networks, the latent variables, denoted by *y*, are typically the largest contributor to the bitrate (several orders of magnitude larger than that contributed by the INR network parameters). One approach to reduce the transmission cost of these latent variables is to entropy code these variables based on their learned distributions, as described in Ladune. Principles of the hybrid INR network proposed in Ladune are described below in reference to FIGS. 6-7.

FIG. 6 is a block diagram illustrating an example video encoder 600 applying a hybrid INR network. The encoder 600 includes a probability prediction (PP) network 620, an up-sampling unit 640, an INR network 650, and entropy-based coders 625, 630, 655. The encoder 600 is configured to process latent variables 610 (e.g., latent variables 525 generated by the mapping unit 520 of FIG. 5). The encoder 600 up-samples, by the up-sampling unit 640, the latent variables. Based on these upsampled latent variables 645 the INR network 650 is trained (overfitted) to produce reconstructed data 660 (e.g., a reconstructed image of a video frame). The training results in optimal INR network parameters *θ* that are coded, by the entropy-based coder 655, into the bitstream 670. In an inference mode, reconstructing the data (e.g., by a decoder 700) involves feeding the trained INR network, defined by the optimal network parameters *θ*, with the upsampled latent variable. And so, in addition to the network parameters *θ*, the latent variables need to be coded into the bitstream 670. As further explained below, due to their large bit representation, efficient coding of the latent variables calls for the estimation of their distributions. To that end, the encoder 600 can be further configured to learn the distributions of respective latent variables using the PP network 620 - that is, a network trained to produce parameters of distributions of respective latent variables. Based on these learned distribution parameters the entropy-based coder 630 codes the latent variables into the bitstream 670. The PP network is defined by PP network parameters, denoted by ψ, determined during the training of the PP network 620. The entropy-based coder 625 codes these PP network parameters into the bitstream 670. Note that in the example of FIG. 6, while the entropy-based coder 630 that codes the latent variables relies on their learned respective distributions, the other entropy-based coders 625, 655 that code the PP network parameters and the INR network parameters rely on respective non-learned distributions. In an aspect, for some of the latent variables, respective non-learned distributions can be used by the entropy-based coder 630. These non-learned distributions may be fixed distributions or may be distributions that was learned with respect to other latent variables (e.g., latent variables representing data from previous frames).

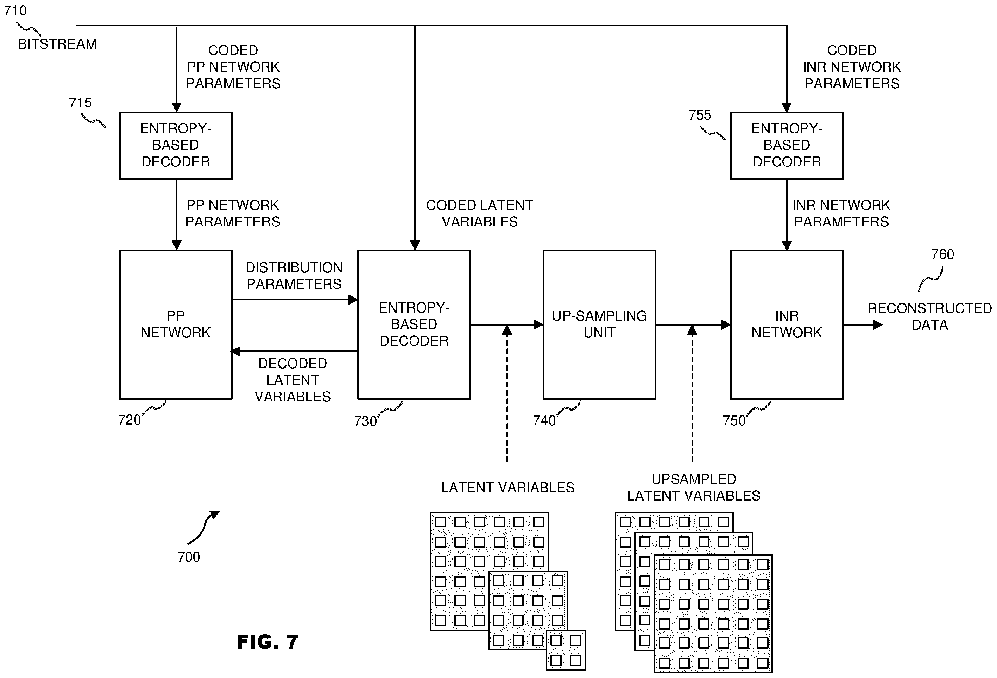

FIG. 7 is a block diagram illustrating an example video decoder applying a hybrid INR network 700. The decoder 700 includes a PP network 720, an up-sampling unit 740, an INR network 750, and entropy-based decoders 715, 730, 755. The PP network 720 produces distribution parameters of respective latent variables. The PP network 720 operates based on learned PP network parameters ψ, determined during the training of the PP network 620. The entropy-based decoder 715 decodes these PP network parameters from the bitstream 710. Based on the produced 720 distribution parameters, the entropy-based decoder 730 decodes the latent variables from the bitstream 710. Already decoded latent variables are provided back to PP network to serve as a context in producing the distribution parameters of the currently decoded latent variable. The decoded latent variables are then upsampled by the up-sampling unit 740 (as performed by the up-sampling unit 640 at the encoder 600). Fed by the up-sampled latent variables, the INR network 750 reconstructs the data 760 (e.g., a reconstructed image of a video frame) it is trained to synthesize based on the INR network parameters, decoded from the bitstream 710 by the entropy-based decoder 755.

The operation of the hybrid INR network is further explained with respect to an image ***x*** of a video frame, however, ***x*** may represent other types of data (such as a surface or a volume) that can be associated with a frame. Note that latent variables representative of data regions (e.g., pixels) from a data frame (e.g., a video frame) referred to herein also as corresponding to that data frame.

As illustrated, the INR network 650, 750 utilizes a hierarchical representation that includes multiple layers of different spatial resolutions 610. Each layer represents an image ***x*** with a width *W* and a height *H* with a corresponding level of detail. Formally, the discrete latent variables, denoted by *ŷ*, can include *K* layers of latent variables: *ŷ =* {*ŷₖ , k =* 0: (*K* - 1)}. Each layer *ŷₖ* is of width *W*/*2^{k}* and of height *H*/*2^{k}.* During the up-sampling 640, each layer *ŷₖ* may be upsampled by a factor of 2*^{k}* (using any interpolation method) to obtain the upsampled layer version, denoted by *ẑₖ* . Together, the upsampled layers, *ẑ =* {*ẑₖ , k* = 0: (*K* - 1)}, result in a dense 3D representation 645 of dimension *W* by *H* by *K.* Thus, the INR network 650 can be trained based on *W* by *H* inputs of *ẑ*(i, j), where each input can include up to *K* latent variables, that is, *ẑ*(i, j) = {*ẑ*(i, j, *k*)*, k =* 0: (*K -* 1))}. For example, the trained INR network 750 can be used to predict a reconstructed pixel ***x̂***(*i, j*)*,* of the original pixel ***x***(*i, j*), by ***x̂***(*i, j*) *= f_{θ}*(*ẑ*(i, j)). In an aspect, depending on the desired bitrate, not all the layers of the latent variables may be used to represent (code) an image ***x***.

When compressing an image ***x*** the goal is to do so while minimizing a cost function, as discussed with respect to equation (2). In the case of a hybrid INR network, the cost of coding an image can be expressed as: $Cost = D \left(x,{f}_{θ}\left(\hat{z}\right)\right) + λR \left(\hat{y}, θ, ψ\right) ,$ where ***x*** denotes an image to be coded with *H* hight, *W* width, and *F* color channels; where *ŷ* denotes the quantized latent variables and *ẑ* denotes their upsampled version; where *f_{θ}* denotes the INR network 650, 750 and *θ* denotes the INR network parameters; where *f*_{ψ} denotes the PP network 620, 720 and ψ denotes the PP network parameters; where *D* denotes a distortion metric measuring the distance between the image ***x*** and its reconstructed version ***x̂***, as produced by the INR network *f_{θ}* from the upsampled latent variables *ẑ*, that is, ***x̂*** *= f**_{θ}***(*ẑ*); and where *R* denotes the rate (in bits per pixel) measuring the number of bits that are required to represent a pixel in a bitstream, that is, the number of bits that are required to represent ŷ, *θ*, and ψ. The distortion *D* and the rate *R* are balanced by a scalar value denoted by *λ*. In a case where the up-sampling unit 640 is implemented by a neural network, the parameters of that network are also learned and coded into the bitstream 670 to be used by the up-sampling unit 740 when used in an inference mode.

As described above, the latent variables are obtained by mapping transformations the input data coordinates to a vector of features. Such a mapping can for example rely on one or more of a lookup table, a partition of the input signal, or a hash function. Multiple mappings may also be done, the associated features are then concatenated. It may also involve interpolation between neighboring vectors of features, for input data coordinates that are not directly associated to a vector of features.

The different hybrid-INR approaches can use different mappings of the input coordinates to features, with a distinct number of layers of features, mapping methods, or resolution of the grids of the features. Therefore, to properly reconstruct a signal that has been encoded using a hybrid-INR approach, the decoder needs to know how the features have been obtained in order to properly used them to reconstruct the signal. For example, the decoder needs additional information to be able to interpret the bitstream in order to reconstruct the input signal using a hybrid-INR decoder.

To allow full flexibility for a hybrid-INR approach, besides the latent values (potentially encoded by NNC), high-level syntax describing how the latent variables are obtained should be available at the decoder.

An aim of the embodiments provided herein is to provide a method allowing for reconstructing a signal encoded using a hybrid-INR approach while the decoder has no prior knowledge of how the features have been obtained. In this way, the decoder can reconstruct a signal encoded using any hybrid-INR approach.

A commonly used strategy with hybrid INR approach is that dimensions of a first tensor/layer are often equal to the dimension of the input signal, and the dimensions of each successive tensor/layer are derived from the dimensions of the previous tensor/layer or the first tensor/layer.

For instance, in the example described above, each layer *ŷₖ* of the latent variable is derived by a division by a power of 2 (width *W*/2*^{k}* and height *H*/2*^{k}*) from a previous layer. However, it may happen that the original size (W, H), of the input signal does not provide an integer when divided by a power of 2 for a given layer. This may bring ambiguity at the decoder side as depending on the implementation, not all the decoders may handle this issue in a same manner.

An aim of the embodiments described herein is to provide a method for implicitly signaling dimensions of the grid of the layers used in the mapping transformations to reduce signaling cost while providing flexibility on the grid dimensions and avoiding ambiguity at the decoder.

In an embodiment, a method is provided that gives to an encoder the possibility to choose a dimension for the first latent grid that avoids ambiguity when signaling latent grid size implicitly for subsequent latent grids. In this embodiment, the same processing for choosing a dimension for the first latent grid that avoids ambiguity is performed by the decoder.

Thanks to this embodiment, all subsequent latent grids have dimensions that are integer when derived from the dimensions of the first latent grid.

In another embodiment, specific signaling of mapping transformations parameters is provided to allow the encoder to efficiently encode the dimensions of the tensors, for example by specifying the mechanism used (i.e. the dimensions of the first tensor/first grid are equal to the smallest dimensions that are larger than the dimensions of the input signal that avoids ambiguity. Also dimensions of subsequent latent grids are signaled implicitly, for example by a ratio between dimensions of a subsequent latent grid and the first grid or one ratio per dimension of the signal.

In a variant, to avoid transmitting unnecessary latent values, it is provided that the encoder can choose and signal whether only values within the signal range are transmitted when the grid is larger than the signal.

In another embodiment, a decoding method is provided wherein a decoder uses the signaled information mentioned above to reconstruct the dimensions of the grid of features.

### Encoding

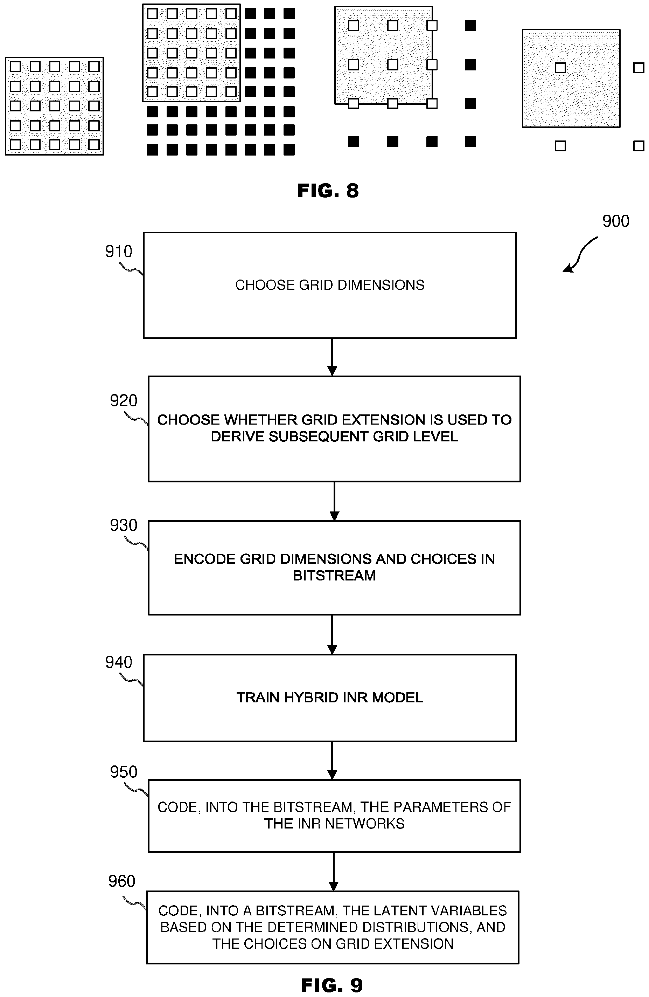

Encoding a signal (e.g. a frame, coding unit or video) according to the embodiments mentioned above may be done as follows, as illustrated in FIG. 8 and 9.

FIG. 9 illustrates a method 900 for encoding an input signal using a hybrid INR approach and corresponding high-level syntax wherein all embodiments mentioned above are implemented. In other variants, only one or some of the embodiments can be implemented.

In case of a video or other temporal signal, frames or data for one instant may be processed one by one. For each input signal:
At 910, grid dimensions are chosen/selected by the encoder. The dimensions of the *K* grid layers of a mapping transformation *ŷ =* {*ŷₖ , k* = 0: (*K* - 1)} are chosen by the encoder. Typically, the first level has the same dimensions as the input signal. As an example, for a frame, these dimensions may be the width *w*₀ = *W* and height *h*₀ *= H* of the frame. In other variants, the dimensions of the first grid level can be larger or smaller than the dimensions/size of the input signal.

As described above, it is common for the dimension of the other grid levels to be derived from the dimension of the first layer, for example each layer *ŷₖ* can be of width *W*/2*^{k}* and of height *H*/2*^{k}.* In this embodiment, the encoder encodes the dimensions of the layers implicitly by signaling to the decoder that they are automatically derived from the dimension of the first level. This signaling can be done using a specific flag indicating so or by using a specific type of mapping transformation that indicates that the dimensions of the subsequent layers are derived from the dimension of the first level. In addition, the encoder signals how to derive the dimensions of the subsequent layers. In a variant, the successive grid dimensions can be determined using a same scaling factor (ratio) for all dimensions and all layers. In this variant, the encoder signal one integer d, the grid dimension ratio, used to divide the dimension of the first grid level so that each layer *ŷₖ* has dimensions: width *wₖ* = *w*ₖ₋₁/d and of height *hₖ* = *h*ₖ₋₁/d*.*

In another variant, the encoder signals multiple integers *d*[*j*], one integer for each dimension j of the latent grid of a layer k, so that each dimension j of the grid is divided by the associated integer to compute dimensions of the next grid level. As an example, for images this would be width *wₖ = w*ₖ₋₁/d[0] and height *hₖ* = *h*ₖ₋₁/d[1]. In this variant, the same ratio d[*j*] is used for all subsequent layers k after the first layer for a dimension j.

In another variant, a different scaling factor value *dₖ* could be specified for each subsequent grid level k. As an example, for images the grid dimensions would be derived for example as follows: width *wₖ* = *w*ₖ₋₁/dₖ[0] and height *hₖ* = *h*ₖ₋₁/dₖ[1].

In a variant, an indication is signaled by the encoder to indicate which variants above is used.

At 920, the encoder chooses whether grid extension is used to derive subsequent grid level. Depending on the first grid level dimensions and the scaling factor used to derive dimensions of subsequent layers, some values of the dimensions of one or more subsequent layers can be non integer values. For example, for some values of *w*₀ (and/or *h*₀), some values *w*ₖ₋₁/d (and/or *h*ₖ₋₁/d), may not be an integer, which is required to construct the grid. To solve this problem, in a variant of this embodiment, the encoder determines an initial grid size (grid dimensions of the first level) that will not cause any such ambiguity. The encoder determines extended dimensios for the first level (for example *w'*₀, *h'*₀ in the case of an image) such that a dimension of a subsequent grid derived from these extended dimensions of the first level is an integer.

As an example in a case of a frame, these values could be determined by $w {′}_{0} = {d}^{K - 1} \left⌈{w}_{0}/{d}^{K - 1}\right⌉$ and $h {′}_{0} = {d}^{K - 1} \left⌈{h}_{0}/{d}^{K - 1}\right⌉$, where ┌ ┐ denotes the ceil function and the superscript denotes the exponent of an exponentiation, when the same scaling factor d is used for all dimensions and all subsequent layers. This can be automatically derived again at the decoder.

In another variant, when multiple scaling factors *d*[*j*] are used (one scaling factor for each dimension j of the latent grid of a layer k), the first grid size can be determined in each dimension by $w {′}_{0} = {\left(d\left[0\right]\right)}^{K - 1} \left⌈{w}_{0}/\left(d{\left[0\right]}^{K - 1}\right)\right⌉$ and $h {′}_{0} = {\left(d\left[1\right]\right)}^{K - 1} \left⌈{h}_{0}/{\left(d\left[1\right]\right)}^{K - 1}\right⌉$*.*

In another variant, when multiple scaling factors *d*[*j*] are used (one scaling factor for each dimension j and layer k>0 of the latent grid), the first grid size can be determined in each dimension $by w {′}_{0} = \left({\prod }_{k = 1}^{K - 1} {d}_{k} \left[0\right]\right) \left⌈{w}_{0}/\left({\prod }_{k = 1}^{K - 1} {d}_{k} \left[0\right]\right)\right⌉$ and $h {′}_{0} = \left({\prod }_{k = 1}^{K - 1} {d}_{k} \left[1\right]\right) \left⌈{h}_{0}/\left({\prod }_{k = 1}^{K - 1} {d}_{k} \left[1\right]\right)\right⌉$.

When *w'*₀ > *w*₀ (and/or *h'*₀ *> h*₀, and/or for other grid levels), some grid positions (e.g. *ŷᵢⱼₖ : i > w*₀ *or j > h*₀) that were not initially chosen by the encoder are not used when reconstructing the image. Transmitting latent values for these positions would increase the bit rate. In a variant, rather than signaling the latent values at these grid positions, the encoder signals an indication indicating that the latent values at these grid positions are not transmitted and only latent values within the signal range are transmitted. This is for example illustrated in FIG. 8. On the left of FIG. 8 is a 5x5 pixel picture that is being encoded using a hybrid INR with *K* = 3 latent grid levels and *d* = 2. Following the procedure discussed above, $w {′}_{0} = {d}^{K} \left⌈{w}_{0}/{d}^{K}\right⌉ = 8$. On the right of FIG. 8 are displayed the 3 latent grid levels, from *K* = 0 (left) to *K =* 3 (right). In this particular example, each latent value of the level *ŷ*₁ and *ŷ*₂ are positioned in the middle of the position of four latent values of the levels *ŷ*₀ and *ŷ*₁, respectively, but their relative positions could differ. For *ŷ*₀, only 25 latent values out of 64 will be used to reconstruct the signal (white squares). The other 39 latent values (black squares) are not used for decoding the image and may not be transmitted without affecting distortion. For *ŷ*₁ only 9 out of 16 values must be transmitted. The other 7 values are not used for decoding the image and may not be transmitted without affecting distortion. In *ŷ*₂, all values must be transmitted. Even though some values fall outside the signal area in this particular example, these values may be used when interpolating the latent values of this level to generate one latent value for all pixels, for example by the up-sampling unit 640 in Figure 6.

To make these choices, steps 910 and 920 may involve encoding the input signal (e.g. frame) using different values for the scaling factor d and different configurations: turning on/off the use of a larger grid size for the first grid level to derive subsequent grid dimensions, using the same scaling factor for all dimensions or not, encoding or not the unused variables that are outside the range of the input signal, evaluating the performance of the different values and configurations on the input signal (e.g. frame or block) based on different metrics including bitrate, distortion and/or decoding complexity, comparing these performances, and choosing the value and configuration that maximizes one metric or a combination of metrics, choosing one method directly based on the characteristics of this part of the signal, for example through an expert designed algorithm or a machine learning model. As an example, one would evaluate all possible values in terms of bitrate and distortion and select the value and configuration that maximizes the cost associated to the encoding and reconstruction of that part of the signal (e.g. frame) as a function of the values and configurations.

At 930, the selected value and configuration (encoder choices) are encoded in the bitstream. The choices made by the encoder (variables such as the use of a larger/extended grid size to derive subsequent grid dimensions, whether the value of the scaling factor is the same for all dimensions or not, the value of scaling factor *d*, whether or not unused variables are encoded) are encoded in the bitstream. An example of an associated syntax is described further below.

In a variant, a flag can be signaled in the bitstream to indicate that extended dimensions for the first grid level have to be determined.

At 940, the Hybrid INR model is trained. using the selected values and configuration encoded at 930. This is the same procedure as training a hybrid INR model. Typically, the full INR model is trained together, including the synthesis network, the latent values and the autoregressive model (or other model) yielding a probability distribution over the latent values. In some variants, training may involve quantization aware training. The training procedure may also involve steps to account for the coding of the probability model, such as quantization, pruning etc., for example by applying these steps, using additional noise and/or adding specific terms to the loss function such as the rate of the network parameters. The model may also have been trained in a previous step.

At 950, the encoder encodes the parameters of the INR model obtained at 940. The neural network(s) (probability model, synthesis model and, if applicable, up sampling model) are encoded in a bitstream. If the model involves a neural network, this is typically done by a neural compression codec such as Neural Network Coding (NNC)/ ISO/IEC 15938-17 or MPEG-7 part 17 or simply by quantizing the weights and/or pruning some neurons from the network.

At 960, the encoder encodes in the bitstream the latent values of the mapping transformation obtained at 940 or 930. The latent values are coded by an entropy coder, based on the discrete probability distribution over the quantized latent features given by the autoregressive model (or another model). This may involve quantization of the latent features if this was not done before.

### Signaling

In this section, examples of possible syntax to encode the signaling mentioned above in the bitstream are described.

In an embodiment, the choices made by the encoder (whether grid dimensions are to be inferred based on the method described above - implicit signaling- and potentially grid dimension ratio(s) and whether only values within the signal range are transmitted), are signaled using a particular type transformation of the input coordinates (inr_input_transformation_type [i]== 4 in the syntax table below).

As an example, in the syntax table provided below, several examples of signaling are also considered to provide full flexibility to the encoder, such as explicit signaling of grid dimensions for inr_input_transformation_type [i]== 3.

Implicit signaling as proposed in the embodiments described herein are shown in italic in the syntax table.

Several variants of implementation can be considered in that the use of implicit signaling could be positioned at a different level. For example, a new **inr_model_type** could be defined instead of a new **inr_input_transformation_type** as in the example of syntax below.

Assuming a quantized network, the following syntax describes the input and output of the network, including the transformations.

| | |
|---|---|
| inr_model( payloadSize ) { | Descriptor |
| **inr_model_type** | u(8) |
| **inr_inference_type** | u(1) |
| **inr_input_dimension_count_minus1** | u(3) |
| for(i=0; i< inr_input_dimension_count_minus1+1; i++) { | |
| **inr_input_range_minus1**[i] | u(16) |
| **inr_input_quantizer**[i] | u(16) |
| **inr_input_zero_centered**[i] | u(1) |
| } | |
| **inr_input_transformation_count** | u(3) |
| for(i=0;i< inr_input_transformation_count;i++){ | |
| **inr_input_transformation_type** [i] | u(8) |
| if (inr_input_transformation_type [i]== 2) { | |
| **inr_Fourier_mapping_coefficient_count_minus1**[i] | u(8) |
| for(j=0;j< inr_Fourier_mapping_coefficient_count_minus1[i]+1;j++) { | |
| **inr_Fourier_mapping_coefficient**[i][j] | u(16) |
| } | |
| } | |
| if (inr_input_transformation_type [i]== 3){ | |
| **hybrid_inr_feature_layers_count_minus1**[i] | u(8) |
| for(j=0;j< hybrid_inr_feature_layers_count_minus1+1;j++) { | |
| **hybrid_inr_feature_layers_type**[i][j] | u(3) |
| if (hybrid_inr_feature_layers_type[i][j]== 1 or hybrid_inr_feature_layers_type[i][j]== 2 ) { | |
| for(k=0;k< **current_feature_dimension_count[i]**;k++) { | |
| **hybrid_inr_feature_grid_dimension_offset**[i][j][k] | u(16) |
| **hybrid_inr_feature_grid_dimension_step_minus1**[i][j][k] | u(16) |
| **hybrid_inr_feature_grid_dimension_range_minus1**[i][j][k] | u(16) |
| } | |
| **hybrid_inr_feature_size_minus1**[i][j] | u(16) |
| **hybrid_inr_feature_grid_interpolation_method**[i][j] | u(3) |
| **hybrid_inr_feature_padding_method**[i][j] | u(3) |
| if hybrid_inr_feature_layers_type[i][j]== 2 { | |
| **hybrid_inr_feature_mapping_method**[i][j] | u(3) |
| } | |
| } | |
| } | |
| **hybrid_inr_feature_mode_idc** | ue(v) |
| if( **hybrid_inr_feature_mode_idc** = = 1 ) { | |
| **hybrid_inr_feature_tag_uri** | u(8) |
| **hybrid_inr_feature_uri** | st(v) |
| } | |
| if(hybrid_inr_feature_mode_idc = = 0 ) { | |
| /* ISO/IEC 15938-17 bitstream */ | |
| while( !byte_aligned( ) ){ | |
| **hybrid_inr_feature_reserved_zero_bit_b** | u(1) |
| for( j = 0; more_data_in_payload( ); j++ ){ | |
| **hybrid_inr_feature_payload_byte**[i][j] | b(8) |
| } | |
| } | |
| } | |
| } | |
| | |
| *if (inr*_*input*_*transformation*_*type [i]== 4 ) {* | |
| **hybrid_inr_feature_layers**_**count_minus1**[i] | u(8) |
| ***hybrid*_*inr*_*feature*_*multiple*_*grid*_*scaling*_*factor*_*****bit**[i]* | *u(1)* |
| *if (hybrid*_*inr*_*feature*_*multiple*_*grid*_*scaling*_*factor*_*bit[i]==0 ) {* | |
| ***hybrid_inr_feature_grid_scaling_factor_minus2**[i]* | *u(8)* |
| *}* | |
| *else {* | |
| *for(j=0;j< current_feature_dimension_count[i];j++) {* | |
| ***hybrid_inr_feature_grid_scaling_factor_minus2**[i][j]* | *u(8)* |
| *}* | |
| *}* | |
| ***hybrid_inr_feature_implicit_scaling_no_outside_transmission[i]*** | *u(1)* |
| for(j=0;j< hybrid_inr feature_layers_count_minus1[i]+1;j++) { | |
| **hybrid_inr_feature_layers_identity_mapping_flag[i][j]** | u(1) |
| **hybrid_inr_feature_size_minus1**[i][j] | u(16) |
| **hybrid_inr_feature_grid_interpolation_method**[i][j] | u(3) |
| **hybrid_inr_feature_padding_method**[i][j] | u(3) |
| if hybrid_inr_feature_layers_identity_mapping_flag [i][j]== 0 { | |
| **hybrid_inr_feature_mapping_method**[i][j] | u(3) |
| } | |
| } | |
| **hybrid_inr_feature_mode_idc** | ue(v) |
| if( **hybrid_inr_feature_mode_idc** = = 1 ) { | |
| **hybrid_inr_feature_tag_uri** | u(8) |
| **hybrid_inr_feature_uri** | st(v) |
| } | |
| if(hybrid_inr_feature_mode_idc = = 0 ) { | |
| /* ISO/IEC 15938-17 bitstream */ | |
| while( !byte_aligned( ) ){ | |
| **hybrid_inr_feature_reserved_zero_bit_b** | u(1) |
| for( k = 0; more_data_in_payload( ); k++ ){ | |
| **hybrid_inr_feature_payload_byte**[i][k] | b(8) |
| } | |
| } | |
| } | |
| } | |
| } | |
| **inr_output_type** | u(3) |
| if (inr_output_type == 0 ) { | |
| **inr_output_dimension_count_minus1** | u(3) |
| for(i=0;i< inr_output_dimension_count_minus1+1;i++) { | |
| **inr_output_range_minus1** [i] | u(16) |
| **inr_output_quantizer**[i] | u(16) |
| **inr_output_zero_centered**[i] | u(1) |
| } | |
| } | |
| } | |

Semantics of the syntax elements signaled in the table above are provided below: **inr_model_type**: tag describing the type of INR approach used to generate the output. For example, the following types may be defined:
∘ **inr_model_type=4:** Hybrid-INR approach where the model takes as input a vector of dimension d (specified by inr_input_dimension_count_minus1) and outputs an output. Inputs is sampled uniformly in the range specified for each dimension.
∘ **inr_model_type=5:** Hybrid-INR approach where the model takes as input a vector of dimension d (specified by inr_input_dimension_count_minus1); where that vector is mapped to features using 7 layers of grid, where the initial grid has a resolution of 1/4 of the resolution of each dimension of the signal, where the resolution of each subsequent grid is divided by 2 with respect to the previous grid and where there is a single value at each point of the grid of each layer and values are linearly interpolated. That model outputs an output. Inputs is sampled uniformly in the range specified for each dimension.
∘ **inr_model_type=6:** variant of **inr**_**model**_**type=5**, where that the number of layers of the grid is not specified and will be specified by the variable **hybrid_inr_feature_layers_count_minus1[i]**.

**inr_input_transformation_count:** integer describing the number of successive transformations applied to the input prior to being fed to the INR network. For example, if one transformation is applied, the value is 1. If three transformations are applied, the value is 3.

**inr_input_transformation_ type [i]:** tag describing the type of transformations applied to the input. The type 0 is let to define custom type. For example, the following types may be defined:
∘ **inr_input_transformation_type[i]=1:** hyperspherical coordinates transform
∘ **inr_input_transformation_type[i]=2:** Fourier mapping using a custom Fourier mapping matrix. This type of value necessitates that **inr_inference_type** is float. In that case, the custom matrix is described as follows:
   ▪ **inr_Fourier_mapping_coefficient_count_minus1[i]:** integer describing the number of Fourier mapping coefficient transformations minus 1.
   ▪ **inr_Fourier_mapping_coefficient[i][j]**: Value of a Fourier mapping coefficient
∘ **inr_input_transformation_type[i]=3:** The transformation is a mapping to a group of features.
∘ ***inr_input_transformation_type[i]-4:** The transformation is a mapping to a group of features where the dimensions of subsequent latent grids are implicitly inferred (as described above in one embodiment). In a variant, the dimensions of subsequent latent grids are implicitly inferred by dividing by increasing power of an integer the dimension of the first grid layer, and where the dimension (step and range ) of the first level grid is the dimension of the signal but increased to avoid any ambiguity when performing this division and the offset is 0.*

Each group of mapping transformation can be described by the following elements:
**hybrid_inr_feature_layers_count_minus1[i]:** integer describing the number of successive group of features. The number of valid grid position in that dimension will be hybrid_inr_feature_grid_dimension_range [i][j][k]= hybrid_inr_feature_grid_dimension_range_minus1[i][j][k]+1

For example, if one group of features are used, the value is 0. If three transformations are used, the value is 2.
***hybrid_inr_feature_multiple_grid_scaling_factor_bit[i]*** indicates whether a different scaling factor is used for every dimension of the grid or if a single scaling factor is used for all dimensions. A value equals to 0 indicates that a single value is used. A value of 1 indicates that a different value is used for each dimension of the grid.
***hybrid_inr_feature_grid_scaling_factor_minus2[i]*** integer describing the scaling ratio between the dimensions of successive group of features. The ratio used will be hybrid_inr_feature_grid_scaling_factor[i] = hybrid_inr_feature_grid_scaling_factor_minus2 [i]+2. For example, if the ratio between dimensions is 2, the value of hybrid_inr_feature_grid_scaling_factor_minus2[i] is 0. If that ratio is three, the value is 1. The dimensions of one level *k* with respect to level *k* - 1 are thus given by e.g. *wₖ* = *w*_{*k*+1}/hybrid_inr_feature_grid_scaling_factor[i] and *hₖ* = *h*ₖ₊₁/hybrid_inr_feature_grid_scaling_factor[i] for a 2D grid.
   ∘ When *hybrid_inr_feature_multiple_grid_scaling_factor_bit[i]*==0, a single value *hybrid_inr_feature_grid_scaling_factor_minus2[i]* is included in the bitstream. When *hybrid_inr_feature_multiple_grid_scaling_factor_bit[i]*==1, multiple values *hybrid_inr_feature_grid_scaling_factor_minus2[i][k]* are included in the bitstream.
***hybrid_inr_feature_implicit_scaling_no_outside_transmission [i]:*** tag indicating whether the bitstream includes the values in the latent grids that are not useful to reconstruct the original signal. A value equals to 0 indicates that these values are not transmitted. A value of 1 indicates that these values are not transmitted.

Other characteristics of the latent features may be defined as follows: **hybrid_inr_feature_layers_identity_mapping_flag[i][j]**: tag indicating whether the mapping between the grid coordinate and the values is the identify function. A value equals to 0 indicates that this mapping is not the identity. A value of 1 indicates that it is.
∘ **hybrid_inr_feature_size_minus1[i][j]:** the number of values associated to each position of the grid, minus 1. For example, if a vector of 2 values is associated to each position of the grid, **hybrid_inr_feature_size_minus1 = 1.**
∘ **hybrid_inr_feature_grid_interpolation_method [i][j]:** Tag describing the method used for feature interpolation. The type 0 is let to define custom type. For example, the following types may be defined:
   ▪ hybrid_inr_feature_grid_interpolation_method [i][j] == 1: linear interpolation
   ▪ hybrid_inr_feature_grid_interpolation_method [i][j] == 2: bicubic interpolation
   ▪ hybrid_inr_feature_grid_interpolation_method [i][j] == 3: interpolation using a neural network . In that case, the neural network parameters of this interpolation network are signalled.
   ▪ Etc
∘ **hybrid_inr_feature_padding_method[i][j]:** Tag describing the method used to pad the grid. The purpose of this tag is to handle cases when points must be queried outside the grid coordinates. This may for example happen when the INR model is used to extend the original image or when using an interpolation method that require point outside the signal domain. The type 0 is let to define custom type. For example, the following types may be defined:
   ▪ **hybrid_inr_feature_padding_method**[i][j] == 1: 0-padding
   ▪ **hybrid_inr_feature_padding_method**[i][j] == 2: replication padding
   ▪ **hybrid_inr_feature_padding_method**[i][j] == 3: reflection padding
   ▪ Etc
∘ When hybrid_inr_feature_layers_identity_mapping_flag[i][j]== 0, the features are mapped using a hash table. An element describing the function mapping a grid point and a value in a table is needed. For example, this element could be named **hybrid_inr_feature_mapping_method**. The type 0 is let to define custom type. Other types can for example be predefined as:
   ▪ hybrid_inr_feature_mapping _method[i][j] == 1: spatial hash function with known parameters
   ▪ hybrid_inr_feature_mapping _method[i][j] == 2: Fibonacci hashing with known parameters
   ▪ hybrid_inr_feature_mapping _method[i][j] == 3: spatial hash function with signalled parameters. In that case, the parameters of this function are signalled. ▪ etc

In other embodiments, signaling whether the bitstream includes the value in the latent grids that are not useful to reconstruct the original may be done at other locations. For example, rather than defining **hybrid_inr_feature_implicit_scaling_no_outside_transmission,** another type of **hybrid_inr_feature_layers_type** may be defined, one where **hybrid_inr_feature_implicit_scaling_no_outside_transmission** is automatically 0, one where it is automatically 1. As another example, it may also be signalled in a picture header, a slide header or a NAL header.

In other embodiments, signaling for the use of one or multiple integer values to compute the dimensions of a subsequent grid layer may be done at different locations. For example, rather than defining **hybrid_inr_feature_multiple_grid_scaling_factor_bit,** two types of **hybrid_inr_feature_layers_type** may be defined, one where **hybrid_inr_feature_multiple_grid_scaling_factor_bit** is automatically 0, one where it is automatically 1. It may also be signalled in a picture header, a slide header or a NAL header. These values (**hybrid_inr_feature_grid_scaling_factor_minus2**) may also be signalled at these locations.

In other embodiments, a different **hybrid_inr_feature_grid_scaling_factor_minus2** value could be specified for each subsequent grid level.

In other embodiments, some elements may be described at another level. For example,
**hybrid_inr_feature_layers_identity_mapping_flag,**
**hybrid_inr_feature_multiple_grid_scaling_factor_bit,**
**hybrid_inr_feature_grid_scaling_factor_minus2,**
**hybrid_inr_feature_grid_interpolation_method, hybrid_inr_feature_mapping_method** and/or **hybrid_inr_feature_padding_method** could be described at once for all feature layers, a subset of feature layers, or for features of any type in a transformation and thus only listed once when inr_input_transformation_type[i]=4. This could be done by default, or another specific feature type could be described with this syntax. Alternatively, the values of all/some of the syntax elements may be fixed for some values of hybrid_inr_feature_layers_type. As an example, a hybrid_inr_feature_layers_type may be defined such that the features are described as a hash table where the mapping function (and potentially the associated coefficients) are known and the scaling ratio between two latent grid dimensions is 2. Some or all these elements may also be signalled in a picture header, a slide header or a NAL header.

In other embodiments, different variants of **inr**_**input**_**transformation**_**type** for hybrid INR, such as the ones described in the previous paragraphs, may be described by a type of variable defined for hybrid INR, i.e. **inr_input_transformation_type[i]=5** in the syntax described above. Such a variable may for example be called **hybrid_inr_transformation_type.**

In other embodiments, some elements may be described together by another variable. For example, a variable name e.g. **inr_input_transformation_subtype** could jointly specify **hybrid_inr_feature_layers_identity_mapping_flag[i][j], hybrid_inr_feature_size_minus1[i][j], hybrid_inr_feature_grid_interpolation_method[i][j]** and/or **hybrid_inr_feature_padding_method[i][j]** and/or **hybrid_inr_feature_multiple_grid_scaling_factor_bit[i]** and/or **hybrid_inr_feature_grid_scaling_factor_minus2** and/or other variables.

In another embodiment, the type of feature (**hybrid_inr_feature_layers_type**) may be described directly as an **inr_input_transformation_type.** In that case, the value **hybrid_inr_feature_layers_type** may not exist, and the different variants would instead be variants of **inr**_**input**_**transformation**_**type.**

In other embodiments, the "grid" and "hash" types of features could be described by the same **hybrid_inr_feature_layers_type**, and identifying how a grid point is mapped to a specific value, for example by specifying a mapping function (hash, identity...). The identity mapping function would correspond to the "grid" type of feature map described above.

In other embodiments, only some variables described above may be used.

In another embodiment, some information listed above may be omitted if they are encoded in the values of the features. For example, the bitstream encoding feature values may come with the size of the tensor. In that case, **hybrid_inr_feature_size_minus1[i][j]** and **hybrid_inr_feature_grid_dimension_range_minus1[i][j]** may be redundant and may not be included in the HLS described above.

The values of the latent features have also to be encoded. For example, the following high-level syntax could be used to indicate signaling of the values of the latent features:
**hybrid_inr_feature_mode_idc** indicates the format used to encode the feature values. A value equals to 0 indicates that the payload contains an ISO/IEC 15938-17 bitstream. A value of 1 indicates that this payload contains features encoded by a format identified by the tag URI **hybrid_inr_feature_tag_uri.**
**hybrid_inr_feature_tag_uri** contains a tag URI with syntax and semantics as specified in IETF RFC 4151 identifying the format and associated information about the INR hybrid features.
**hybrid_inr_feature_uri** contains a URI with syntax and semantics as specified in IETF Internet Standard 66 identifying the INR hybrid features.
**hybrid_inr_feature_payload_byte[i]** contains the i-th byte of a bitstream conforming to ISO/IEC 15938-17. The byte sequence inr_payload_byte[i] for all present values of i shall be a complete bitstream that conforms to ISO/IEC 15938-17.

In other embodiments, the names of the variables may change, for example by using "mapped" or "grid" instead of "hybrid" in the names.

In this embodiment, high level syntax has been described where the values of all the hybrid feature layers are encoded and sent in the same bitstream. In an alternative embodiment, there may be one bitstream for each layer, or each group of layers.

In alternative embodiments, the values of some relevant coefficients or parameters may be included in the bitstream, for example the coefficient of the interpolation function or the coefficients of the hash function, if applicable.

For example, below is a description of a first transformation in an INR model that aimed at encoding an image of size 5x5 with no upsampling and wherein in this first transformation, input coordinates are mapped to 3 grids of features using linear interpolation and replication padding, wherein the first grid is aligned with the input coordinate grid (input signal) and the dimensions of the two subsequent grids are the dimensions of the previous grid, divided by 2, and where the first grid used is associated to 6 different values for every grid point (no hash mapping) and the other 2 grids are associated to a hash mapping based on spatial hashing of the grid coordinates, and where the grids contain respectively 5 and 4 values at every grid point, and where ambiguity in the division are avoided using the embodiment described above according to which the size of the first grid is inferred to be the smallest grid size that avoids ambiguity, i.e. avoids non-integer values of subsequent grids layers) and the values in the latent grids that are not useful to reconstruct the original signal are not transmitted. Only parameters related to the grid transformation are listed. / denotes floor division, % the modulo operator, // real division and ^ a power operator.
- inr_input_transformation_type[0] = 4
- hybrid_inr_feature_layers_count_minus1[0] = 2
- hybrid_inr_feature_multiple_grid_scaling_factor_bit[0]=0
- hybrid_inr_feature_grid_scaling_factor_minus2[0] = 0
- hybrid_inr_feature_implicit_scaling_no_outside_transmission[0] = 1
- hybrid_inr_feature_layers_identity_mapping_flag[0][0] = 1
- hybrid_inr_feature_size_minus1[0][0] = 5
- hybrid_inr_feature_grid_interpolation_method[0][0] = 1
- hybrid_inr_feature_padding_method[0][0] = 2
- hybrid_inr_feature_layers_identity_mapping_flag [0][1] = 0
- hybrid_inr_feature_size_minus1[0][1] = 4
- hybrid_inr_feature_grid_interpolation_method[0][1] = 1
- hybrid_inr_feature_padding_method[0][1] = 2
- hybrid_inr_feature_mapping_method[0][1]=1
- hybrid_inr_feature_layers_identity_mapping_flag [0][2] = 0
- hybrid_inr_feature_size_minus1[0][2] = 3
- hybrid_inr_feature_grid_interpolation_method[0][2] = 1
- hybrid_inr_feature_padding_method[0][2] = 2
- hybrid_inr_feature_mapping_method[0][2]=1

Mapping an input coordinate (x,y) to the features, to recover the image in its original size, would then be as follows, where we denote by g[j](.) the function corresponding to feature dimension j mapping an integer coordinate to a value. The function hash(.,.) hashes the first argument using a hash function specified by the second argument of type **hybrid_inr_feature_mapping_method.** Indices i,j,k respectively denote the transformation index (and is always the same), the hybrid INR feature layer index and the hybrid INR feature dimension index.

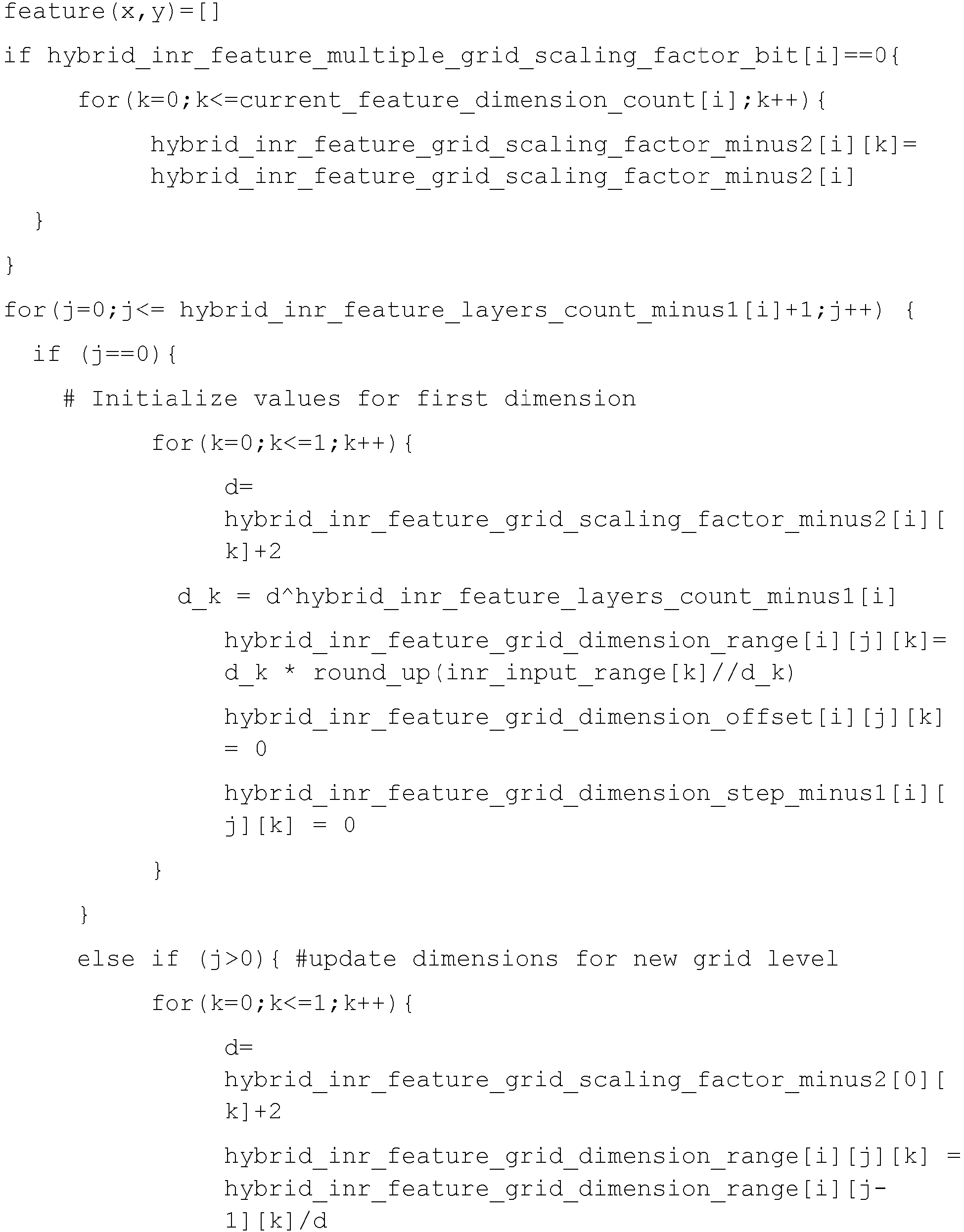

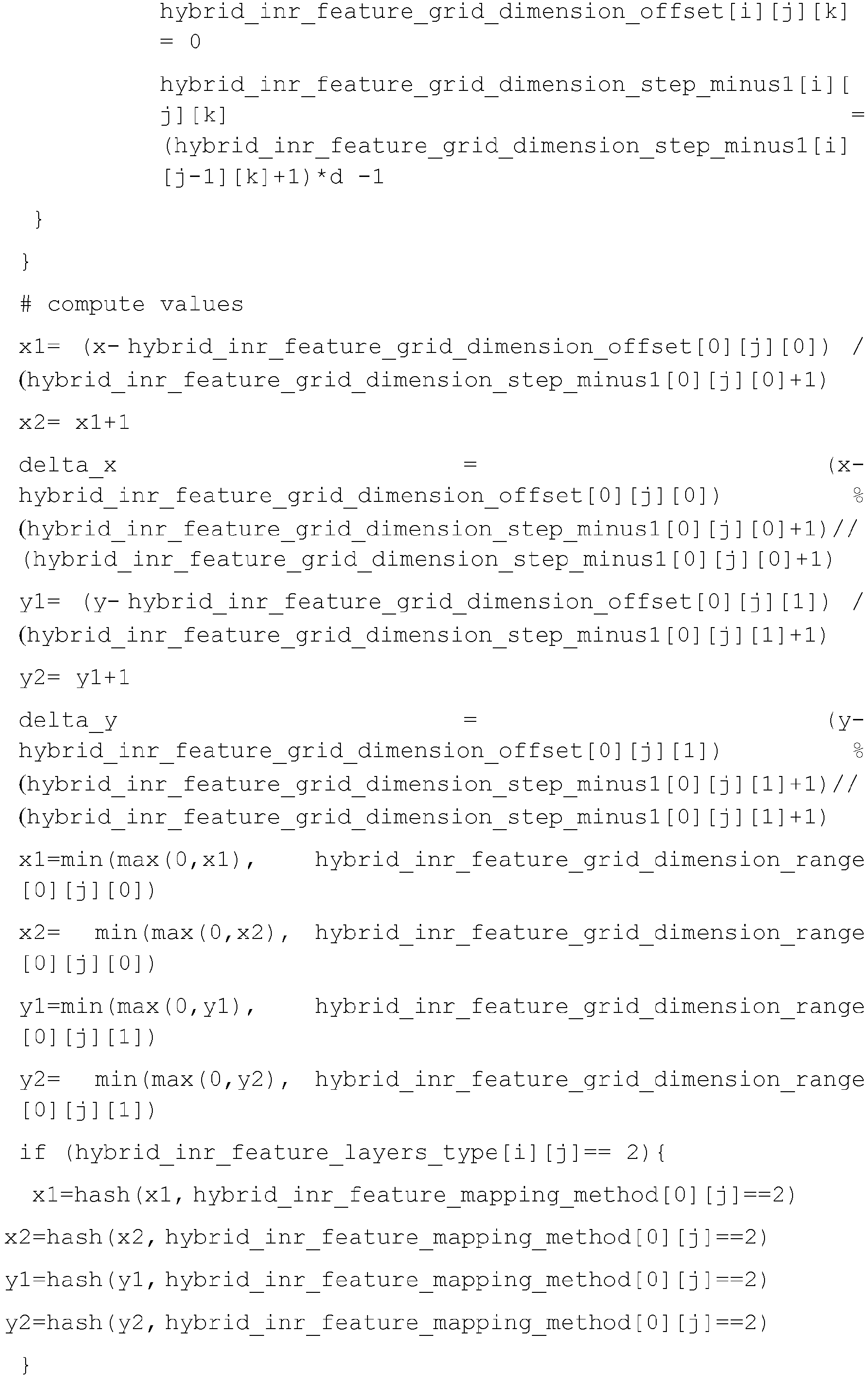

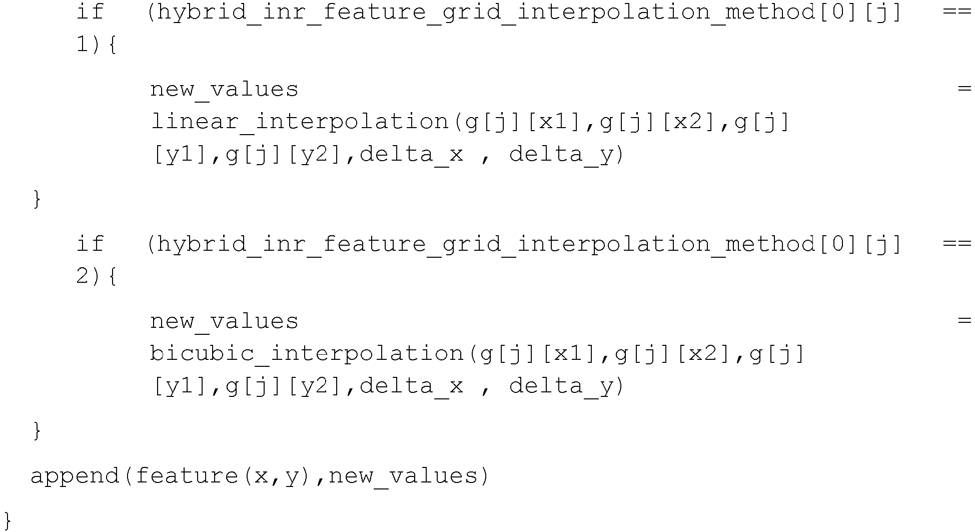

Note that in case integer arithmetic is used, division operators may be replaced by a combination of shift and multiplication operators.

### Decoding procedure

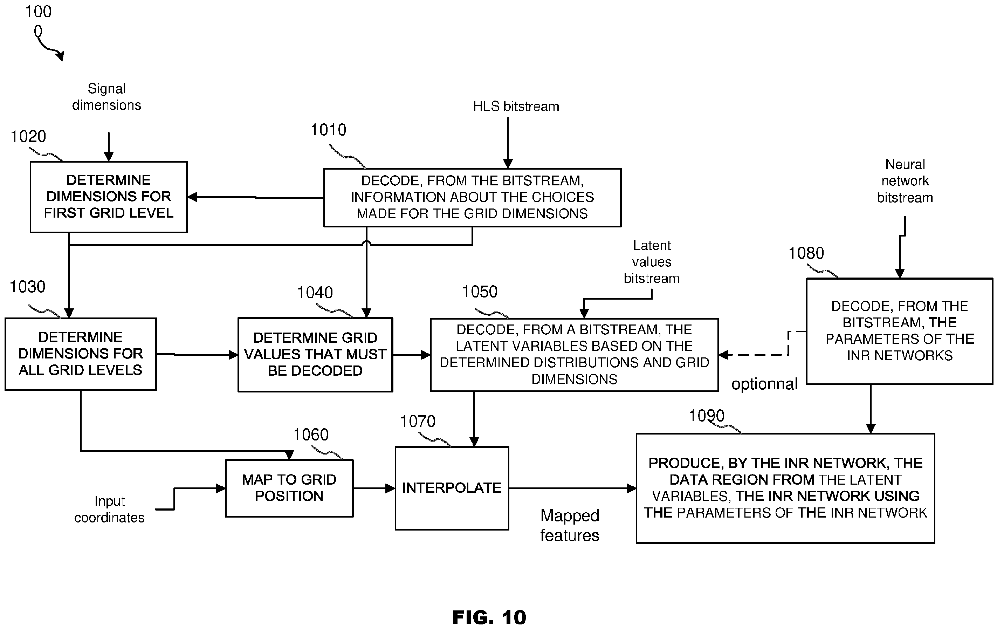

FIG. 10 illustrates a method 1000 for decoding a bitstream resulting from an encoding as described in an embodiment with FIG. 9. FIG. 10 provides a high-level overview of an example process a decoder may rely on to use the HLS described in the embodiments provided herein and the associated bitstream to decode a signal.

It is assumed that the decoder has already determined that the latent grid dimension scheme proposed in the embodiments described above is used and this step is not depicted in FIG. 10. This can be done by identifying a specific value of a syntax element, for example using the inr_input_transformation_type [i] ==4 as in the table above.

The input bitstream or parts of this bitstream is/are fed to the decoder. The input bitstream includes a bitstream carrying coded data representing the latent variables or feature values, a bitstream carrying coded data representing the Neural Network parameters and a bitstream carrying the HLS discussed above, for example encoded following the table described above.

At 1010, the decoder decodes from the HLS bitstream the encoder choices about the grid dimensions: variables such as in a variant a flag indicating use of a larger/extended grid size to derive subsequent grid dimensions to avoid ambiguity, whether the value of the scaling factor is the same for all dimensions or not, d, whether unused variables are encoded or not. Typically, the information that are decoded are the information encoded at 930 by the encoder.

Based on the signal dimension (which in a variant, can be encoded in the HLS bitstream or in another bitstream) and the scaling factor(s) *d*, at 1020, the decoder determines the grid size for the first level as described above. At 1030, this first level grid size and the scaling factors are then used to compute the dimensions of the grid for the other levels. In a variant, at 1040, the decoder determines the grid positions in the successive grid levels for which feature values have to be decoded from the bitstream carrying the latent variables. This determination is done based on the grid dimensions determined at 1030 and the syntax element indicating whether feature values at that are outside the signal range are encoded in the bitstream. At 1050, the grid dimensions and/or the grid positions for which features values have to be decoded are used by the decoder to decode the feature values. The decoder takes as input the bitstream containing the feature values of and/or URI identifying the feature values and obtain their values.

At 1080, the decoder decodes the neural network (INR) from the neural network bitstream. In another variant, this step can be done by a neural network decoder (for example a NNC decoder). In a variant, at 1050, the decoder may also take as input the neural network decoded at 1080 and use this neural network to infer a probability distribution over these feature values that is used to decode the feature values using an entropy decoder.

At 1060, for every set of input coordinates of the signal to reconstruct that must be mapped to feature values, the decoder maps these input coordinates to relevant grid positions. For example, for images, these input coordinates are typically pairs (*x, y*) positions where *x* and *y* respectively range from one to the width or height of the image. Alternatives are possible depending on the type of INR used, for example using coordinates associated to blocks of pixels. To perform the mapping, the decoder uses HLS information that define the position of the grid points and their relationship to the input coordinates, such as the offset, the number of steps and the size of the grid. Typically, it may also use information about the mapping function and the number of feature maps. At 1070, the decoder obtains the feature values based on the input coordinates, from the set of decoded feature values, provided mapped features. If the feature layer is a grid, then the decoder queries the values. If the feature layer is based on a hash function, the input coordinates may first be hashed using additional HLS information such as the hashing function to use. Padding method may be useful if the input coordinates are outside the area covered by the grid. The decoder may interpolate the feature values, if necessary, based on interpolation HLS information and concatenate the feature values.

At 1090, the feature values (mapped features) obtained at 1070 are used as input for the INR network to reconstruct the signal. The INR network may have been decoded from the bitstream at 1080.

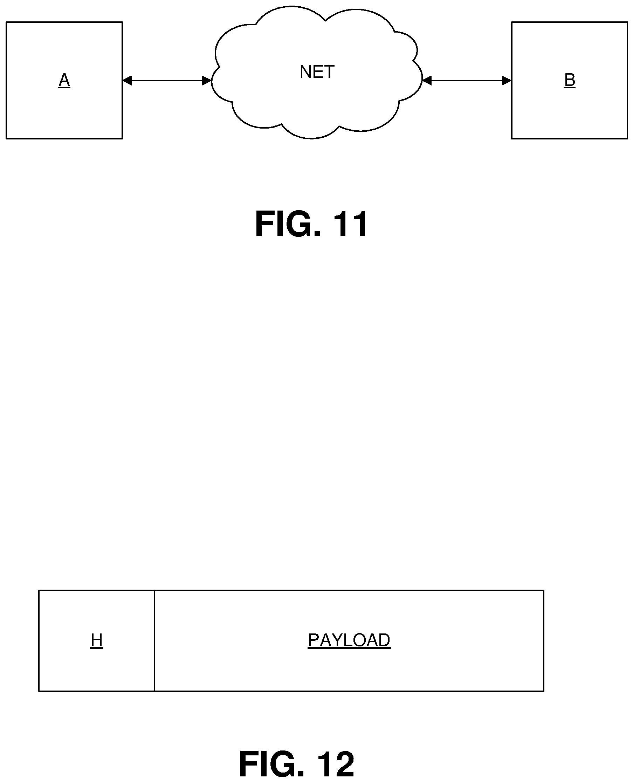

In an embodiment, illustrated in FIG. 11, in a transmission context between two remote devices A and B over a communication network NET, the device A comprises a processor in relation with memory RAM and ROM which are configured to implement a method for encoding one or more syntax elements for reconstructing a signal using a hybrid-INR decoder, as described with FIG. 1-10 and the device B comprises a processor in relation with memory RAM and ROM which are configured to implement a method for decoding one or more syntax elements for reconstructing a signal using a hybrid-INR decoder as described in relation with FIG 1-10. In accordance with an example, the network is a broadcast network, adapted to broadcast/transmit a coded INR and one or more syntax elements described herein from device A to decoding devices including the device B. In some embodiments, the coded INR, feature values and the one or more syntax elements of HLS are transmitted in a same signal. In other embodiments, the coded INR, features values and the one or more syntax elements of HLS are transmitted separately in distinct signals.

FIG. 12 shows an example of the syntax of a signal transmitted over a packet-based transmission protocol. Each transmitted packet P comprises a header H and a payload PAYLOAD. In some embodiments, the payload PAYLOAD may comprise one or more syntax elements for reconstructing a signal using a hybrid-INR decoder, according to any one of the embodiments described above.

In some embodiments, the one or more syntax elements comprises at least one of an indication indicating that dimensions of subsequent grids of features of at least one mapping transformation are inferred from dimensions of a first grid of features, at least one scaling factor for deriving dimensions of a current grid from dimensions of the first grid of at least two successive grids of features of the at least one mapping transformation or an indication signaling whether a features value at a grid position that lies outside a range of the input coordinates is signaled in the bitstream.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method, comprising:
- decoding one or more syntax elements providing for reconstructing at least one part of an image or a 3D object using at least one hybrid Implicit Neural Representation network, the at least one hybrid Implicit Neural Representation network comprising:
at least one mapping transformation that maps input coordinates of the image or 3D object to at least two successive grids of features, and
an INR network that takes as input, features of the at least one grid of features and outputs values of the image or 3D object at the input coordinates, wherein dimensions of a current grid of the at least two successive grids of features are derived from a first grid of the at least two successive grids of features based on the one or more syntax elements;
- determining an extension of at least one dimension of a first grid of the at least two successive grids of features providing an extended dimension of the first grid of the at least two successive grids of features;
- determining dimensions of grids of the at least two successive grids of features using the extended dimension of the first grid;
- mapping input coordinates to grid positions of the grids of the at least two successive grids of features to reconstruct the at least one part of the image or 3D object.

2. A method, comprising encoding at least one part of an image or a 3D object using at least one hybrid Implicit Neural Representation network, the at least one hybrid Implicit Neural Representation network including:
at least one mapping transformation that maps input coordinates of the image or 3D object to at least two successive grids of features, and
an INR network that takes as input, features of the at least one grid of features and outputs values of the image or 3D object at the input coordinates,
wherein encoding the at least one part of an image or a 3D object comprises:
obtaining one or more syntax elements that provides for deriving dimensions of a current grid of the at least two successive grids of features from a first grid of the at least two successive grids of features,
determining an extension of at least one dimension of a first grid of the at least two successive grids of features providing an extended dimension of the first grid of the at least two successive grids of features,
determining dimensions of grids of the at least two successive grids of features using the extended dimension of the first grid providing determined dimensions grid
obtaining features values of the at least two successive grids of features using the determined dimensions grid,
obtaining parameters of the INR network using the feature values,
encoding in a bitstream the one or more syntax elements, the feature values and the parameters of the INR network.

3. The method of claim 1 or 2, wherein a value of at least one dimension of any one of the at least two successive grids of features derived from the extended dimension of the first grid of features of the at least two successive grids of features is an integer.

4. The method of any one of claims 1-3, wherein determining an extension of at least one dimension of the first grid is responsive to a determination that a value of at least one dimension of at least one grid of the at least two successive grids of features derived from a dimension of the first grid of features of the at least two successive grids of features is not an integer.

5. The method of any one of claims 1 or 3, further comprising decoding a flag indicating that an extended dimension of the first grid has to be determined, and wherein determining an extension at least one dimension of the first grid is based on a value of the flag.

6. The method of claims 2 or 3, further comprising encoding a flag indicating that an extended dimension of the first grid has to be determined, and wherein determining an extension at least one dimension of the first grid is based on a value of the flag.

7. The method of any one of claims 1-6, wherein dimensions of the current grid of the at least two successive grids of features are implicitly signaled in the bitstream by the one or more syntax elements.

8. The method of claim 1, further comprises obtaining feature values for the input coordinates based on the grid positions and providing the feature values to the INR.

9. The method of any one of claims 1-8, wherein the one or more syntax elements comprises at least one scaling factor for deriving dimensions of the current grid from dimensions of the first grid of the at least two successive grids.

10. The method of claim 9, wherein determining dimensions grids of the at least two successive grids of features include, for the current grid of the at least two successive grids, scaling dimensions of the first grid of the at least two successive grids using at least one scaling factor.

11. The method of any one of claims 9-10, wherein the at least one scaling factor is a single scaling factor used along all dimensions of the first grid of features and all grids of features of the at least one mapping transformation.

12. The method of any one of claims 9-10, wherein the at least one scaling factor comprises a scaling factor per dimension of the first grid of features.

13. The method of any one of claims 9-10, wherein the at least one scaling factor comprises a scaling factor per grid of features of the at least one mapping transformation and wherein the scaling factor per grid of features is a single scaling factor used along all dimensions of the first grid of features.

14. The method of any one of claims 1-13, wherein the one or more syntax elements comprises an indication signaling whether a features value at a grid position that lies outside a range of the input coordinates is signaled in the bitstream.

15. An apparatus comprising one or more processors configured to implement the method of any one of claims 1-14.
